Europäisches Patentamt

European Patent Office

Office européen des brevets

(19)

(11) Veröffentlichungsnummer: **0 260 372 B1**

(12) EUROPÄISCHE PATENTSCHRIFT

(45) Veröffentlichungstag der Patentschrift:
01.08.90

(51) Int. Cl.⁵: **B60K 31/04**

(21) Anmeldenummer: **87103449.2**

(22) Anmeldetag: **10.03.87**

(54) Einrichtung zur Begrenzung der Geschwindigkeit eines Kraftfahrzeugs.

(30) Priorität: **13.09.86 DE 3631289**

(43) Veröffentlichungstag der Anmeldung:
**23.03.88 Patentblatt 88/12**

(45) Bekanntmachung des Hinweises auf die Patenterteilung:
**01.08.90 Patentblatt 90/31**

(84) Benannte Vertragsstaaten:
**DE FR GB NL SE**

(56) Entgegenhaltungen:
**DE-A- 3 108 378
DE-A- 3 142 360
DE-A- 3 441 070
FR-A- 2 254 252
US-A- 3 804 193**

(73) Patentinhaber: **VDO Adolf Schindling AG,
Gräfstrasse 103, D-6000 Frankfurt/Main 90(DE)**

(72) Erfinder: **Pfalzgraf, Manfred, Luisenstrasse 24,
D-6000 Frankfurt am Main(DE)**
Erfinder: **Wokan, Andreas, Jakobstrasse 22,
D-6100 Darmstadt(DE)**
Erfinder: **Probst, Kurt, Altkönigstrasse 19,
D-6231 Schwalbach a. T.(DE)**

(74) Vertreter: **Klein, Thomas, Dipl.-Ing. (FH), Sodener
Strasse 9 Postfach 6140, D-6231 Schwalbach a. Ts.(DE)**

## Beschreibung

Die Erfindung betrifft eine Einrichtung zur Begrenzung der Geschwindigkeit eines Kraftfahrzeugs auf einen vorgegebenen Wert, nach der Gattung des Hauptanspruchs.

Aus der DE-A1 3 441 070 ist eine Einrichtung zum Steuern der Geschwindigkeit eines Kraftfahrzeugs mit Verbrennungsmotor bekannt, bei der einem Steuerkreis für den Antrieb des Kraftfahrzeugs sowohl Signale eines Fahrzeuggeschwindigkeitsdetektors als auch ein der Motordrehzahl entsprechendes Signal und ein der Stellung eines durch den Fahrer betätigbaren Sollwertgebers entsprechendes Signal zugeführt werden. Bei eingeschaltetem Geschwindigkeitsregler wird das der Fahrzeuggeschwindigkeit entsprechende Signal zur Ermittlung von ersten Daten für die Kraftstoffmengenregelung herangezogen und damit die Fahrzeuggeschwindigkeit konstant gehalten. Für den Fahrer eines Kraftfahrzeugs kann sich der Wunsch oder auch verkehrsbedingt die Notwendigkeit ergeben, trotz wirksamer Geschwindigkeitsregelung kurzfristig und kurzzeitig die Fahrzeuggeschwindigkeit zu erhöhen, indem er das Fahrpedal niedertritt.

Bei der bekannten Einrichtung werden aus dem Motordrehzahlsignal und aus dem der Stellung des Fahrpedals entsprechenden Signal ständig zweite Daten für die Kraftstoffmengenzumessung errechnet und mit den ersten Daten verglichen. Solange bei wenig oder gar nicht betätigtem Fahrpedal die zweiten Daten kleinere Werte für die Kraftstoffmenge darstellen als die ersten, vom Geschwindigkeitsregler erzeugten, Daten, fährt das Fahrzeug mit konstanter geregelter Geschwindigkeit. Übersteigen beim Niedertreten des Fahrpedals die Werte der zweiten Daten die Werte der ersten Daten, dann werden diese anstelle der ersten Daten an das Stellglied für die Kraftstoffzumeßeinrichtung weitergeleitet und der Verbrennungsmotor gehorcht den Befehlen vom Fahrpedal, und zwar so lange, bis die so generierten zweiten Werte die Werte der ersten Daten wieder unterschreiten. Eine Geschwindigkeitsbegrenzung des Fahrzeugs auf einen vorgegebenen Wert bei Ausfall des der Fahrzeuggeschwindigkeit entsprechenden Signals findet bei der bekannten Einrichtung nicht statt.

Es ist jedoch erwünscht, zur Erfüllung gesetzlicher Vorschriften oder zur Verbesserung der Fahrökonomie und des Verschleißverhaltens bei Kraftfahrzeugen, insbesondere bei Nutzkraftfahrzeugen, Geschwindigkeitsbegrenzer einzusetzen, die das Überschreiten einer vorgegebenen Höchstgeschwindigkeit verhindern, obwohl eine Überschreitung aufgrund der Motorleistung und der Achsübersetzung möglich wäre.

Diese bekannten Geschwindigkeitsbegrenzer benötigen zur Funktionserfüllung ein Signal, welches den Ist-Wert der Fahrzeug-Geschwindigkeit darstellt (im folgenden Geschwindigkeitssignal genannt). Fällt dieses Signal durch Manipulation oder einen technischen Defekt aus, ist der Geschwindigkeitsbegrenzer wirkungslos, so daß es möglich ist, die zulässige Höchstgeschwindigkeit zu überschreiten.

Der Erfindung liegt daher die Aufgabe zugrunde, eine Einrichtung nach dem Gattungbegriff derart weiterzubilden, daß eine Begrenzung der Geschwindigkeit des Kraftfahrzeugs auf einen vorgegebenen Wert zuverlässig auch dann erfolgt, wenn das der Fahrzeuggeschwindigkeit entsprechende Signal ausgefallen ist.

Die Lösung dieser Aufgabe erfolgt mit der im kennzeichnenden Teil des Hauptanspruchs angegebenen Maßnahme.

Die erfindungsgemäße Einrichtung ist danach dadurch gekennzeichnet, daß bei Ausfall des der augenblicklichen Fahrzeuggeschwindigkeit entsprechenden Signals das der Motordrehzahl entsprechende Signal zur Begrenzung der Fahrzeuggeschwindigkeit auf den vorgegebenen Wert wirksam geschaltet ist.

Die erfindungsgemäße Einrichtung begrenzt die Fahrzeug-Geschwindigkeit zuverlässig, auch dann, wenn das Geschwindigkeitssignal gestört bzw. ausgefallen ist. Dabei ist die Begrenzung nach den Drehzahlsignalen derart ausgelegt, daß selbst bei längster Übersetzungsstufe des Getriebes die zulässige Höchstgeschwindigkeit nicht überschritten wird. Bei anderen Übersetzungsstufen des Getriebes setzt die Begrenzung bei der gleichen Drehzahl, jedoch bei niedriger Geschwindigkeit ein. Dieses ist jedoch kein Nachteil, denn bis zum Erreichen des maximalen Drehzahlwertes steht dem Fahrer die volle Motorleistung zu Verfügung. Damit ist sichergestellt, daß eine ausreichende Leistung für einen Betrieb mit ausgefallenem Geschwindigkeitssignal vorhanden ist. Dieser "Notfahrbetrieb" gewährleistet ein ausreichendes Fortbewegen des Fahrzeugs.

Gemäß einer Weiterbildung der Erfindung ist vorgesehen, daß das Geschwindigkeitssignal ein Impulssignal ist, wobei die Impulsbreite im gesamten Geschwindigkeitsbereich kleiner als 100% ist, daß das Impulssignal dem Steuerkreis über eine Schaltung zugeführt ist, welche bei Unterbrechung des Geschwindigkeitssignals dem Steuerkreis eine Spannung zuführt, die einer Impulsbreite von 100% entspricht. Durch diese Weiterbildung wird ein einfaches Erkennen eines Defekts oder einer Manipulation durch Unterbrechung der Zuleitung, beispielsweise durch Abziehen eines Steckers, gewährleistet.

Eine einfache Ausgestaltung dieser Weiterbildung besteht darin, daß die Schaltung eine Transistorschaltstufe mit einem Pull-up-Widerstand ist. Diese Schaltung, die im Eingangsbereich des Steuerkreises angeordnet sein kann, benötigt nur wenige Bauelemente und führt dem Steuerkreis bei Ausfall des Geschwindigkeitssignals eine entsprechende Spannung zu.

Eine andere Weiterbildung der Erfindung besteht darin, daß das Drehzahlsignal ferner zur Begrenzung der Geschwindigkeit des Fahrzeugs wirksam ist, wenn das Geschwindigkeitssignal sich unter einem Wert befindet, der einer vorgegebenen geringen Geschwindigkeit des Fahrzeugs entspricht. Hierbei wird auch bei einer Manipulation durch Kurzschließen der Geschwindigkeitsgeber-Leitung auf eine Geschwindigkeitsbegrenzung durch das Drehsignal umgeschaltet. Allerdings ist dadurch auch beim Anfahren die Drehzahl des Motors begrenzt.

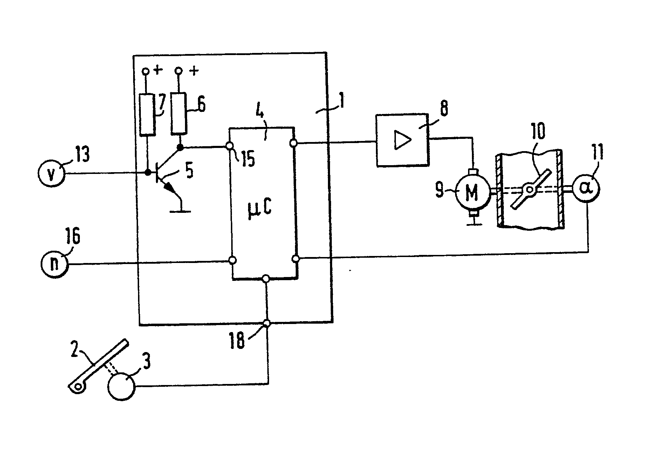

Die Erfindung ist schematisch in der Zeichnung an Hand mehrerer Figuren dargestellt und nachfolgend beschrieben. Es zeigt die einzige Figur schematisch ein Ausführungsbeispiel.

Dem Steuergerät 1 einer E-Gas-Anlage wird als Sollgröße das Ausgangssignal eines mit einem Gaspedal 2 verbundenen Gebers 3 über einen Eingang 18 zugeführt. Das Steuergerät 1 umfaßt einen Mikrocomputer 4 und periphere Schaltungen, von denen lediglich die aus einem Transistor 5, einem Arbeitswiderstand 6 und einem Pull-up-Widerstand 7 bestehende Schaltung dargestellt ist. Vom Mikrocomputer werden der Stellung des Gaspedals 2 entsprechende Signale über eine Leistungsstufe 8 dem Antrieb 9 einer Drosselklappe 10 zugeführt. Anstelle der Drosselklappe 10 ist im Rahmen der Erfindung auch ein anderes Motor-Stellglied verwendbar, beispielsweise der Regler einer Dieseleinspritzpumpe. Die Drosselklappe 10 ist mit einem Geber 11 verbunden, welcher dem Steuergerät ein der Drosselklappenstellung entsprechendes Signal zuführt. Der Mikrocomputer 4 ist somit Teil eines Steuerkreises, mit dem die Drosselklappe 10 in eine vom Gaspedal 2 vorgegebene Stellung gebracht wird.

Entsprechende Programme für den Mikrocomputer 4 sind an sich bekannt und brauchen im Rahmen der Erfindung nicht näher erläutert zu werden. Diese gilt auch für die Auswertung des von einem Geschwindigkeitsgeber 13 zugeführten Geschwindigkeitssignals. Diese Auswertung erfolgt derart, daß bei Erreichen einer zulässigen Höchstgeschwindigkeit die Drosselklappe 10 trotz möglicherweise weiterem Durchtreten des Gaspedals 2 nicht weiter geöffnet wird, bzw. im Falle einer Talfahrt bei überschreiten der Höchstgeschwindigkeit geschlossen wird.

Das Geschwindigkeitssignal besteht aus pulsbreitenmodulierten Impulsen, wobei die Impulsbreite innerhalb des in Frage kommenden Geschwindigkeitsbereichs nicht 100% einnimmt. Sollte die Leitung zwischen dem Geber 13 und dem Steuergerät unterbrochen oder der Geber 13 ausgefallen sein, so bleibt der Transistor 5 ständig im leitenden Zustand, so daß über den Transistor 5 von dem Massepol kontinuierlich niedrige Spannung dem Eingang 15 des Mikrocomputers zugeführt wird. Dieser wertet dieses als Ausfall des Geschwindigkeitssignals aus und führt die weitere Begrenzung der Geschwindigkeit mit Hilfe des von einem weiteren Geber 16 erzeugten Drehzahlsignals durch, welches ebenfalls dem Mikrocomputer 4 zugeführt wird.

Durch eine entsprechendes Programm im Mikrocomputer 4 der Einrichtung kann als Weiterbildung vorgesehen sein, daß eine Begrenzung der Fahrzeuggeschwindigkeit auch dann erfolgt, wenn der Eingang für das Geschwindigkeitssignal durch Manipulation kurzgeschlossen ist. Dabei wird das Drehzahlsignal zur Regelung verwendet, wenn das Geschwindigkeitssignal unterhalb eines vorgegebenen Wertes liegt. Dieses ist sowohl beim Anfahren als auch bei kurzgeschlossenem Eingang der Fall. Liegt kein Kurzschluß vor, so wird jedoch nach erfolgtem Anfahren das Geschwindigkeitssignal größer als der vorgegebene Wert, so daß es zur Begrenzung der Fahrzeuggeschwindigkeit verwendet wird.

Während des Anfahrvorgangs ist dann allerdings die Motordrehzahl begrenzt. In den meisten Fällen liegt diese Begrenzung jedoch oberhalb derjenigen Drehzahl, bei welcher der Motor das maximale Drehmoment abgibt.

## Patentansprüche

1. Einrichtung zur Begrenzung der Geschwindigkeit eines Kraftfahrzeugs auf einen vorgegebenen Wert, mit einem Steuerkreis für den Antrieb des Kraftfahrzeugs, dem ein der augenblicklichen Fahrzeuggeschwindigkeit entsprechendes Signal, ein der Motordrehzahl entsprechendes Signal und ein des Stellung eines durch den Fahrer betätigbaren Sollwertgebers entsprechendes Signal angeführt ist, dadurch gekennzeichnet, daß bei Ausfall des der augenblicklichen Fahrzeuggeschwindigkeit entsprechenden Signals das der Motordrehzahl entsprechende Signal zur Begrenzung der Fahrzeuggeschwindigkeit auf den vorgegebenen Wert wirksam geschaltet ist.

2. Einrichtunng nach Anspruch 1, dadurch gekennzeichnet, daß das der augenblicklichen Fahrzeuggeschwindigkeit entsprechende Signale ein Impulssignal ist, wobei die Impulsbreite im gesamten Geschwindigkeitsbereich kleiner als 100% ist, daß das Impulssignal dem Steuerkreis über eine Schaltung (5, 6) zugeführt ist, welche bei Unterbrechung des Geschwindigkeitssignals dem Steuerkreis eine Spannung zuführt, die einer Impulsbreite von 100% entspricht.

3. Einrichtung nach Anspruch 2, dadurch gekennzeichnet, daß die Schaltung eine Transistorschaltstufe (5) mit einem Arbeitswiderstand (6) und einem Pull-up-Widerstand (7) ist.

4. Einrichtung nach einem der Ansprüche 1 bis 3, dadurch gekennzeichnet, daß das der Motordrehzahl entsprechende Signal ferner zur Begrenzung der Geschwindigkeit des Fahrzeugs wirksam ist, wenn das Geschwindigkeitssignal sich unter einem Wert befindet, der einer vorgegebenen geringen Geschwindigkeit des Fahrzeugs entspricht.

## Claims

1. Device for limiting the speed of a motor vehicle to a predetermined value, with a control circuit for the drive of the motor vehicle, to which are sent a signal corresponding to the instantaneous vehicle speed, a signal corresponding to the engine speed and a signal corresponding to the position of a desired-value transmitter actuable by the driver, characterized in that, if the signal corresponding to the instantaneous vehicle speed fails, the signal corresponding to the engine speed is made effective for limiting the vehicle speed to the predetermined value.

2. Device according to Claim 1, characterized in that the signal corresponding to the instantaneous vehicle speed is a pulse signal, the pulse width being less than 100% over the entire speed range, and in that the pulse signal is fed to the control circuit via a switching arrangement (5, 6) which, if the speed signal is cut off, feeds to the control circuit a voltage corresponding to a pulse width of 100%.

3. Device according to Claim 2, characterized in that the switching arrangement is a transistor switch stage (5) with a load resistor (6) and with a pull-up resistor (7).

4. Device according to one of the Claims 1 to 3, characterized in that, furthermore, the signal corresponding to the engine speed is effective for limiting the speed of the vehicle when the speed signal is below a value corresponding to a predetermined low speed of the vehicle.

## Revendications

1. Dispositif pour la limitation de la vitesse d'un véhicule à une valeur prédéterminée, ce dispositif comportant un circuit de commande pour l'entraînement du véhicule automobile et auquel sont amenés un signal correspondant à la vitesse instantanée du véhicule, un signal correspondant à la vitesse de rotation du moteur et un signal correspondant à la position d'un transmetteur de valeurs de consigne manœuvrable par le conducteur, dispositif caractérisé en ce qu'en cas de défaillance du signal correspondant à la vitesse instantanée du véhicule, le signal correspondant à la vitesse de rotation du moteur est branché efficacement sur la valeur préétablie pour limiter la vitesse du véhicule.

2. Dispositif selon la revendication 1, caractérisé en ce que le signal correspondant à la vitesse instantanée du véhicule est un signal à impulsions, dont la durée des impulsions est, dans la totalité de la plage des vitesses, inférieure à 100%; en ce que le signal à impulsions est amené au circuit de commande par un montage (5, 6), qui, en cas d'interruption du signal de vitesse, amène au circuit de commande une tension qui correspond à une durée d'impulsions de 100%.

3. Dispositif selon la revendication 2, caractérisé en ce que le montage est un plot de commutation à transistor (5) avec une résistance de travail (6) et une résistance "Pull-Up" (7).

4. Dispositif selon l'une des revendications 1 à 3, caractérisé en ce que le signal correspondant à la vitesse de rotation du moteur intervient en outre pour limiter la vitesse du véhicule, si le signal de vitesse se situe au-dessous d'une valeur qui correspond à une faible vitesse prédéterminée du véhicule.